# EUROPÄISCHE PATENTANMELDUNG

(11) **EP 1 241 222 A1**
(43) Veröffentlichungstag der Anmeldung: **18.09.2002**
(21) Anmeldenummer: 02005428.4
(22) Anmeldetag: 08.03.2002
(51) Int. Cl.: C08L 23/08, C08L 75/04, C08K 5/14, C08J 3/24

(54) **Ethylen-Vinylacetat-Polymermaterial, Verfahren zu seiner Herstellung und Mischungen mit thermoplastischen Polyurethanen**

(30) Priorität: 13.03.2001 DE 10112007
(71) Anmelder: Universität Stuttgart Institut für Kunststofftechnologie, 70199 Stuttgart (DE)
(72) Erfinder: Fritz, Hans-Gerhard, Professor Dr.-Ing., 73066 Uhingen (DE); Jin, Fan, Dipl.-Ing., 70569 Stuttgart (DE)
(74) Vertreter: Hoeger, Stellrecht & Partner

(57) **Zusammenfassung**

Um ein neuartiges EVA-Polymermaterial zur Verfügung zu stellen, das zusammen mit thermoplastischen Polyurethanen als Matrixkomponente zu einem Zweiphasenwerkstoff verarbeitet werden kann, bei dem synthetische Elastomerpartikel in mikrodisperser Verteilung und hochvernetzter Form in einer kontinuierlichen Thermoplastmasse eingebettet sind, wird vorgeschlagen, dass dieses EVA-Polymermaterial einen Vinylacetatanteil des EVA-Polymers von 20 bis 50 Gew.% umfasst, wobei das Polymer in Gegenwart eines Co-Monomeren peroxidisch mit einem vernetzbaren Organosilan gepfropft ist, wobei das Co-Monomere ausgewählt ist aus substituierten und unsubstituierten α-Olefinen.

## Beschreibung

Die Erfindung betrifft ein neues EVA-Polymermaterial sowie ein Verfahren zu seiner Herstellung.

Solche EVA-Polymermaterialien sind vor allem dazu geeignet, in thermoplastischen Polyurethanen als Matrix eine mikrodispers verteilte Kautschukphase zu bilden. Auch diesen Aspekt und die Herstellung solcher Zusammensetzungen betrifft die vorliegende Erfindung.

Die Erfindung hat sich zur Aufgabe gestellt, ein neuartiges EVA-Polymermaterial zur Verfügung zu stellen, das zusammen mit thermoplastischen Polyurethanen als Matrixkomponente zu einem Zweiphasenwerkstoff verarbeitet werden kann, bei dem synthetische Elastomerpartikel in mikrodisperser Verteilung und hochvernetzter Form in einer kontinuierlichen Thermoplastmasse eingebettet sind. Solche Materialien zeigen bei Raumtemperatur ein gummiähnliches Deformationsverhalten, besitzen aber nach wie vor thermoplastische Verarbeitungseigenschaften, welche ein werkstoffliches Recycling erleichtern.

Diese Art thermoplastischer Vulkanisate zeichnet sich ferner dadurch aus, dass ihre Morphologie durch einen dynamischen Vernetzungsvorgang der dispersen Phase fixiert ist. Morphologie- und damit verbundene Eigenschaftsänderungen können deshalb in nachgeschalteten Formgebungsschritten nicht mehr auftreten.

Thermoplastische Vulkanisate auf reiner Polyolefinbasis sind im Markt bereits eingeführt. Solche Zweiphasenwerkstoffe kommen heute vor allem in der Automobil-, Medizin- und Dichtungstechnik sowie auf dem Gebrauchsartikelsektor in vielfältiger Form zur Anwendung.

Für den jeweiligen Einsatzfall besteht jedoch teilweise der Wunsch nach einer verbesserten Ölresistenz, verbunden mit einer geringeren Ölquellung, einer höheren Chemikalien- und Abrasionsresistenz sowie einer besseren Oberflächenqualität.

Die im Folgenden zu diskutierenden EVA-Materialien eignen sich als mikrodisperse Phase in thermoplastischen Polyurethanen zur Lösung dieser Problemstellungen.

Erfindungsgemäß wird ein EVA-Polymermaterial mit einem Vinylacetatanteil des EVA-Polymers von 20 bis 50 Gew.% vorgeschlagen, wobei das Polymer peroxidisch mit einem vernetzbaren Organosilan in Gegenwart eines Co-Monomeren gepfropft ist, wobei das Co-Momomere ausgewählt ist aus substituierten und unsubstituierten α-Olefinen. Solche EVA-Polymermaterialien lassen sich hervorragend in thermoplastische Polyurethane in mikrodisperser Verteilung einarbeiten und im gleichen Arbeitsschritt vernetzen, so dass dann die vorerwähnte Morphologie- und Eigenschaftsstabilität der erhaltenen Werkstoffe gesichert ist. Gleichzeitig handelt es sich bei diesem Zweiphasenwerkstoff immer noch um einen Thermoplast, der sich zur Ausformung von Formteilen eignet.

Für den erfindungsgemäß vornehmlich vorgesehenen Einsatzfall der EVA-Polymermaterialien eignen sich insbesondere solche EVA-Polymere, bei denen der Vinylacetatanteil höher liegt, d. h. in einem Bereich von 35 bis 50 Gew.% und weiter bevorzugt in einem Bereich von 40 bis 50 Gew.% Bei Vinylacetatanteilen oberhalb von 40 Gew.% erhält man besonders gute Elastomereigenschaften.

Bei der Pfropfung der EVA-Polymermaterialien mit dem Organosilan werden typischerweise Gelgehalte von 70 % und mehr erhalten, wobei diese Werte für viele Anwendungszwecke ein unzureichendes elastisches Rückstellvermögen des daraus hergestellten thermoplastischen Vulkanisats erwarten lassen. Dabei wird das Organosilan gegenüber dem Peroxid in einem großen Überschuss verwendet. Eine Steigerung des Peroxidanteils bei der Pfropfungsreaktion zur Steigerung der Silanpfropfungsrate führt nicht zum gewünschten Erfolg, weil damit beim EVA unerwünschte Nebenreaktionen zwischen den Makromolekülen, d. h. direkte Vernetzung der Makromoleküle miteinander oder auch β-Spaltung in nennenswertem Umfang erzeugt wird.

Erfindungsgemäß werden deshalb zur Erzielung höherer Gelgehalte bei den EVA-Materialien während der Pfropfung die genannten Co-Monomere mitverwendet.

Der Einsatz ungesättigter Comonomere erhöht den Silanpfropfungsgrad und unterdrückt unerwünschte Nebenreaktionen wie z. B. die β-Spaltung oder eine Molekülrekombination.

Wirken Peroxidradikale auf das EVA-Copolymer ein, so können Radikalstellen in der EVA-Hauptkette und/oder an der benachbarten Acetatgruppe entstehen. Da das letztgenannte Radikal gegenüber dem Organosilan nur eine geringe kinetische Aktivität besitzt, reagiert es bevorzugt mit einem anderen EVA-Makroradikal. Die Folge ist eine Vorvernetzung des Copolymers. Addiert man jedoch ein Comonomer, das eine erhöhte kinetische Reaktivität gegenüber dem Organosilan aufweist und gleichzeitig auf ein EVA-Makroradikal gepfropft werden kann, so entsteht ein neues Makroradikal, das vier Reaktionswege (Organosilan-Pfropfung, Rekombination, β-Scission, Disproportionierung) offenlässt. Die peroxidinitiierte EVA-Vorvernetzung wird damit unterdrückt.

Erstaunlicherweise erhält man durch die Verwendung von Co-Monomeren Gelgehalte von 90 % und mehr und damit hervorragende elastische Rückstelleigenschaften der Endprodukte.

Hervorragende Materialeigenschaften in der mikrodispers vorliegenden Phase erhält man bei EVA-Polymermaterialien, bei denen der Anteil des gepfropften Organosilans 1,5 bis 5 Gew.%, bezogen auf die gesamte Masse des Polymers, beträgt.

Bevorzugt liegt der Anteil des gepfropften Organosilans bei 2 bis 4,5 Gew.% und weiter bevorzugt bei 3 bis 4 Gew.%.

Das Organosilan und das Peroxid werden in einem Gewichtsverhältnis von 100 bis 25 zur Pfropfung verwendet, wobei das Gewichtsverhältnis hier bezogen ist auf das organische Peroxid 2,5-Dimethylhexan-2,5-di-t-butylperoxid (DHBP), das einen Aktivsauerstoff(AO)gehalt von 9,8% besitzt. Setzt man Peroxide mit geringeren AO-Gehalten ein, so verringert sich das Gewichtsverhältnis entsprechend, während bei Peroxiden mit höheren AO-Gehalten eine entsprechende Vergrößerung der vorgenannten Grenzwerte zu errechnen ist.

Weiter bevorzugt wird das Gewichtsverhältnis von Organosilan und Peroxid 70 bis 25 betragen, wiederum bezogen auf den Aktivsauerstoffgehalt von DHBP.

Weiter kann man Einfluss auf das Eigenschaftsspektrum des Endproduktes nehmen, indem man das Molverhältnis von Co-Monomer zu Organosilan variiert, wobei sich hier ein Bereich von 0,1 bis 1 empfiehlt.

Die für die vorliegende Erfindung geeigneten Organosilane sind lange aus der Silanvernetzung von Polymerwerkstoffen bekannt, und hier sei nur ein Beispiel, welches auch bei der Silanvernetzung von Polyolefinen häufig zum Einsatz kommt, nämlich das Vinyltrimethoxysilan (VTMOS), genannt.

Weiter bevorzugt liegt das Molverhältnis von Comonomer zu Organosilan im Bereich von 0,2 bis 0,5, besonders bevorzugt im Bereich von 0,25 bis 0,35.

Die Bereichsgrenzen ergeben sich dadurch, dass das Co-Monomer mit größerwerdendem Anteil die peroxidische (unerwünschte) Vorvernetzung des EVA-Polymers zurückdrängt, sich aber andererseits negativ auf die Silanpfropfungsausbeute auswirkt.

Die Verwendung des Co-Monomers bewirkt, dass die Organosilangruppen sowohl direkt auf die Makromoleküle aufgepfropft werden als auch über auf Acetatgruppen des EVA-Makromoleküls aufgepfropfte Co-Monomergruppen mit dem Makromolekül verknüpft werden.

Um ein konkretes Beispiel zu geben, lassen sich mit VTMOS als Organosilan und Dodecen als Co-Monomer noch VTMOS/DHBP-Verhältnisse von 30 realisieren, ohne dass es zu einer nennenswerten Vorvernetzung der Ethylenvinylacetatcopolymermoleküle kommt. Damit lassen sich auch deutlich erhöhte Pfropfungsraten realisieren, die zu Gelgehalten von bis zu 95 % führen.

Die Erfindung betrifft, wie eingangs schon ausgeführt, auch thermoplastische Zusammensetzungen, welche eine thermoplastische Polyurethanmatrix und eine in der Matrix mikrodispers verteilte Phase aus einem EVA-Polymermaterial aufweisen, wie dies vorstehend im Einzelnen beschrieben wurde.

Bei der Verarbeitung der thermoplastischen Zusammensetzung bzw. bei ihrer Erzeugung wird dafür gesorgt, dass die Bedingungen geschaffen sind, unter denen eine Vernetzung des mit Organosilangruppen gepfropften EVA-Polymermaterials möglich ist, d.h. zunächst eine Hydrolyse der Organosilane unter Ausbildung von Silanolgruppen und anschließende Kondensation derselben unter Ausbildung eines dreidimensionalen Netzwerkes.

Auf diese Weise lässt sich die mikrodispers verteilte Phase an EVA-Polymermaterial in der Polyurethanmatrix stabilisieren, insbesondere in ihrer Morphologie und in ihrem Eigenschaftsspektrum.

Bevorzugt wird man bei der gemeinsamen Verarbeitung von EVA-Polymermaterial und thermoplastischem Polyurethan einen Vernetzungskatalysator für die Organosilanvernetzung einarbeiten, wobei hier erfindungsgemäß insbesondere Lewissäuren in Frage kommen.

Um die Vernetzung der Silangruppen der aufgepfropften Organosilanmoleküle unter Ausbildung von Si-O-Si-Brücken zur Erzeugung der angestrebten dreidimensionalen Raumnetzstruktur zu fördern und insbesondere die Zeiten für eine Ausvulkanisation der dispersen Phase zu verkürzen, wird das Material bevorzugt einen Wasser-Carrier umfassen, der für die Hydrolyse der Organosilane zur Ausbildung von Silanolgruppen notwendigen Wasseranteile bereits im Werkstoff selbst bereitstellt.

Eine besonders bevorzugte Lewissäure liegt in dem Material der Zeolithe, insbesondere sogenannter Y-Zeolithe vor, welche nicht nur die Funktion als Lewissäure und damit als Vernetzungskatalysator spielen können, sondern gleichzeitig als Wasser-Carrier fungieren können.

Im Bezug auf die EVA-Polymermaterialien, hat das Zeolithmaterial noch den Vorteil, dass es auch in dieser Funktion als nanoskaliger Füllstoff im Polymermaterial fungieren kann.

Der zuvor schon angesprochene Wasser-Carrier liegt vorzugsweise in fein verteilter Form in der Polymerzusammensetzung vor, wobei der Wasser-Carrier einen Anteil am Gesamtmaterial (TPU + EVA) aufweist, der zwischen 0,5 und 5 phr, bevorzugt zwischen 1 und 4 phr und ganz bevorzugt zwischen 1,5 und 3 phr liegt.

Beispiele, die für die Lewissäuren neben den zuvor schon erwähnten Zeolithen zu erwähnen wären, sind beispielsweise Adipinsäure, langkettige Fettsäuren wie Palmetinsäure, Stearinsäure, aber auch anorganische Materialien wie Natriumdihydrogenphosphat-Dihydrat, EDTA-Dinatriumsalz-Dihydrat, oder auch Aluminiumoxid aktiviert in saurer Form.

Bei den Wasser-Carriern ist neben den Zeolithmaterialien eine breite Auswahl möglich, wobei hier nur beispielsweise Verbindungen zu nennen sind wie Magnesiumsulfatheptahydrat (Bittersalz), EDTA-Dinatriumsalz-Dihydrat, Calciumsulfathemihydrat, Calciumsulfatdihydrat, Magnesiumsulfathydrat, Natriumhydrogenphosphatdihydrat, Kaliumalaun, Calciumoxalathydrat, Magnesiumtiosulfathexahydrat und andere.

Bei den vorgenannten Substanzen darf darauf hingewiesen werden, dass manche von ihnen auch in der Liste der Lewissäuren bereits genannt wurden, und diese Substanzen erfüllen in der Tat zwei Funktionen, ebenso wie sie zuvor im Rahmen der Benennung der Zeolithe als Lewissäure und Wasser-Carrier beschrieben wurden.

Die erfindungsgemäßen thermoplastischen Zusammensetzungen weisen bevorzugt ein Gewichtsverhältnis des Matrixmaterials zu dem mikrodispers verteilten EVA-Polymermaterial im Bereich von 70:30 bis 30:70 auf.

Weiter bevorzugt liegt das Gewichtsverhältnis von TPU-Matrixmaterial zu EVA-Polymermaterial im Bereich von 35:60 bis 60:40.

Bei der Auswahl der thermoplastischen Matrixwerkstoffe kommen sowohl thermoplastische Polyether- als auch Polyesterurethane in Frage.

Bevorzugt enthalten die thermoplastischen Polyurethankomponenten langkettige Polyesterdiole mit einer geringen Zahl von Esterbindungen, welche durch die potenzielle Ausbildung von Wasserstoffbrückenbindungen einen wesentlichen Beitrag zur Matrixfestigkeit leisten. Darüber hinaus zeichnet sich dieser Typ von thermoplastischem Polyurethan durch eine hohe Hydrolyseresistenz aus.

Schließlich kann bei der erfindungsgemäßen thermoplastischen Zusammensetzung noch ein sogenannter Compatibilizer vorhanden sein, der die Wechselwirkungen zwischen dem Matrixpolymer und dem EVA-Polymermaterial intensiviert. Als solche Verträglichkeitsvermittler wären beispielsweise Maleinsäureanhydrid gepfropfte Ethylenvinylacetatcopolymere (als Beispiel wäre hier das Polymermaterial Fusabond MC 190 D zu nennen, ein mit 0,5 phr MAH gepfropftes Ethylenvinylacetatcopolymer (28 % VA), erhältlich von der Firma DuPont Europe).

Untersucht man das Optimum der Pfropfungsbedingungen, so findet man unter Vorgabe konstanter VTMOS-Zugabemengen im Bereich von 3 bis 4 phr mit größer werdendem Verhältnis von VTMOS zu DHBP, d. h. bei sinkender Peroxidkonzentration, dass Gelgehalt und Vernetzungsdichte deutlich abnehmen. So ermittelt man z. B. für einen Anteil an VTMOS von 3,5 phr und ein VTMOS-Verhältnis von 70 lediglich noch einen Gelgehalt von 73 % und eine Vernetzungsdichte von 8 x 10⁻⁵ Mol/ml. Diese Werte lassen ein nicht allzu ausgeprägtes elastisches Rückstellvermögen dieses Vulkanisats erwarten. Wie zuvor erwähnt, lässt sich jedoch der Anteil des Peroxids zur Steigerung der Silanpfropfungsrate nicht durchführen, weil dies bei dem EVA zu unerwünschten Nebenreaktionen zwischen den Makromolekül-Radikalen des EVA führt. Die Messung von dynamischen Speicher- und Verlustmodulmessungen belegen, dass es hier zu einer Vorvernetzung des Copolymeren führt, was eine Dispergierung des EVA-Materials in der Matrix des thermoplastischen Polyurethans während der nachfolgenden Compoundierung erschwert oder gar unmöglich macht.

Wie zuvor in Teilen schon beschrieben, lässt sich dieses Problem durch die Einbeziehung synergetischer sogenannter Comonomere in die Rezeptierung lösen, die im Stande sind, den Pfropfungsgrad bei der Pfropfreaktion zu erhöhen und gleichzeitig die angesprochenen Nebenreaktionen zu unterdrücken. Als Beispiele für die unsubstituierten und substituierten α-Olefine, die erfindungsgemäß als Co-Monomer Verwendung finden, lassen sich langkettige Olefine, z. B. Dodecen, andererseits auch Vinylester, Maleinsäureanhydrid oder Vinylpyrrolidon nennen.

Bei der Katalysatorauswahl zur Katalyse der Vernetzungsreaktion wird bei der Silanvernetzung von Polyolefinen standardmäßig auf das Dibutylzinndilaurat zur Beschleunigung der Hydrolyse und Kondensationsreaktion zurückgegriffen.

Dieser Katalysator erweist sich jedoch für die erfindungsgemäßen thermoplastischen Zusammensetzungen aus thermoplastischer Polyurethanmatrix und mikrodisperser EVA-Polymermaterialphase als unbrauchbar. Das Dibutylzinndilaurat führt nämlich zu einem fast vollständigen Abbau des thermoplastischen Polyurethans, so dass damit nicht nur schlechte Ergebnisse, sondern sogar völlig unbrauchbare erzielt werden.

Anders dagegen die Verwendung der Lewissäuren, die hinsichtlich ihrer Wirkungseffizienz als Reaktionsbeschleuniger für die dynamische Vernetzung des Ethylenvinylacetatcopolymeren in der thermoplastischen Polyurethanmatrix ausgezeichnete Ergebnisse erzielen.

Im Folgenden sei anhand der Zeichnung noch die Aufbereitung der thermoplastischen TPU/EVA-Vulkanisate im Einzelnen näher beschrieben. Es zeigen dabei:
- Fig. 1: Schneckengeometrie zur Herstellung silanvernetzter thermoplastischer TPU/EVA-Vulkanisate;
- Fig. 2: Verfahrensschema bei der Silanpfropfung von EVA-Copolymeren; und
- Fig. 3: Verfahrensschema der TPU/EVA-Vulkanisat-Compoundierung.

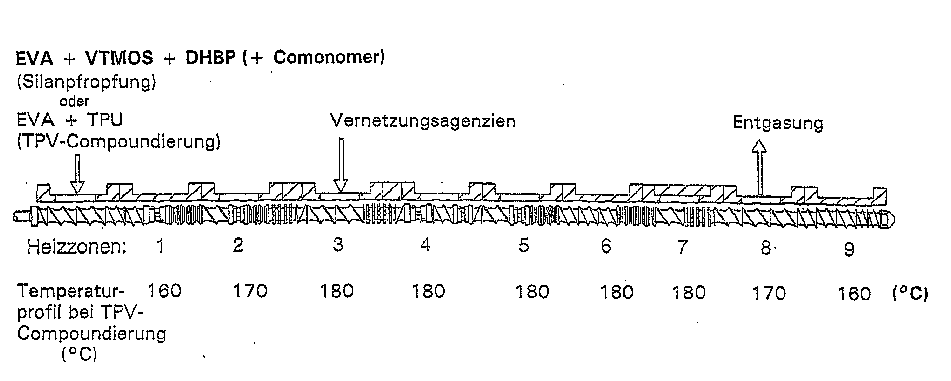

Die erfindungsgemäßen thermoplastischen Zusammensetzungen lassen sich alternativ mittels eines Ein- oder Zweistufenprozesses herstellen. Aus Transparenzgründen sei der Zweistufenprozeß erläutert: In einem ersten Verfahrensschritt erfolgt die Aufpfropfung des Organosilans auf das Ethylen-Vinylacetat-Copolymer, im zweiten die dynamische Vernetzung dieser synthetischen Kautschukphase und die Ausbildung der angestrebten diskreten Zweiphasenmorphologie mit mikrodisperser Verteilung des EVA-Polymermaterials in der thermoplastischen Polyurethan-Matrix. Beide Prozessteilschritte werden im vorliegenden Beispiel sequentiell unter Verwendung eines gleichsinnig drehenden, dichtkämmenden Zweischneckenextruders, Typ ZSK 25 der Fa. Werner & Pfleiderer, durchgeführt, der ein L/D-Verhältnis von 40 aufweist. Sowohl für die Silanpfropfungs- als auch für die Vernetzungsprozedur kann eine identische Schneckengeometrie eingesetzt werden, die in Fig. 1 schematisch dargestellt ist.

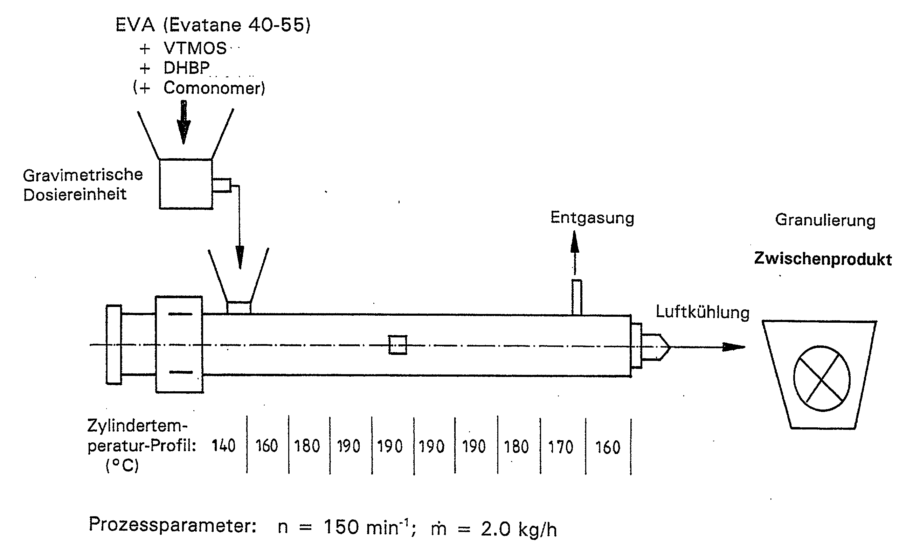

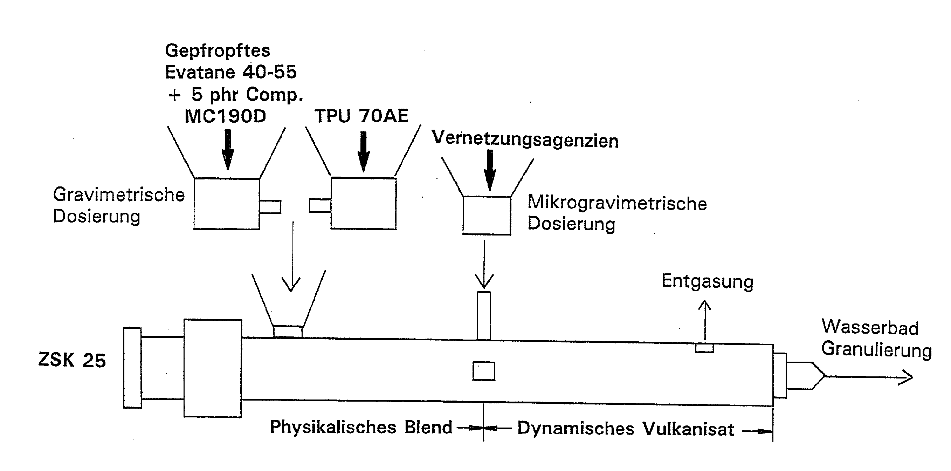

Zu den beiden Verfahrensstufen im Einzelnen:
(A) Organosilanpfropfung des EVA-Polymers
Das Verfahrenskonzept ist in Fig. 2 veranschaulicht: Das mit einer Mischung von Organosilan (VTMOS), Peroxid (DHBP) und Comonomer gecoatete EVA-Granulat wird gravimetrisch dosiert dem Zweischneckenextruder zugeführt, plastifiziert, peroxidradikalisch aktiviert und mit den Organosilan-Molekülen kovalent verknüpft. Die Kühlung der Strangextrudate erfolgt mittels Luft. Alle Experimente werden mit einem Massedurchsatz von m = 2,0 kg/h und einer Schneckendrehzahl von n = 150 min⁻¹ gefahren. Diese Parameter ergeben eine hinreichend lange Masseverweilzeit, um eine vollständige Peroxiddekomposition sicherzustellen.
(B) Dynamische Vernetzung der Kautschukphase
Das die Kautschukphase bildende silangepfropfte EVA-Polymermaterial (in den Beispielen: Evatane 40-55), gemischt mit einem Compatibilizer (Beispiele: Fusabond MC 190 D), und ein thermoplastisches Polyurethan (Beispiele: TPU 70 AE) werden mittels zweier gravimetrischer Dosiersysteme in die ZSK 25 eingespeist (Fig. 3). Nach einer Plastifizierzonenlänge von L = 12D erfolgt die Zuführung der Vernetzungsagenzien mittels einer mikrogravimetrischen Dosiereinheit. Damit setzt der Vulkanisationsprozess ein. Unter der Einwirkung hoher Verformungsspannungen und Deformationsgeschwindigkeiten vollzieht sich, initiiert durch abgestaute Knetblöcke, eine Mikrodispergierung der EVA-Partikel, deren Viskosität vernetzungsbedingt kontinuierlich anwächst. Zerfallsprodukte aus den chemischen Reaktionen sowie überschüssiges Wasser werden stromabwärts extrahiert (→ Entgasung). Die Prozessparameter Massedurchsatz (m = 2,0 kg/h) und Schneckendrehzahl (n = 500 min⁻¹) werden bei allen Compoundierexperimenten konstant gehalten.
Das zuvor beschriebene zweistufige Verfahren lässt sich unter Verwendung einer Extruderkaskade problemlos auch einstufig praktizieren, was aus ökonomischen Gründen vorteilhaft ist.
(C) Formulierungsparameter und resultierende Eigenschaftsprofile von ausgewählten TPU/EVA-Vulkanisaten
Gemäß dem vorstehend beschriebenen Zweistufenprozess wurde eine Vielzahl von Proben generiert, von denen einige exemplarisch näher beleuchtet werden sollen. Die eingesetzten Komponenten sind in Tabelle 1 zusammengestellt. Die Beispiele M1 bis M3, bei denen es sich rezepturbedingt um echte thermoplastische Vulkanisate handelt, sind aus identischen Basiskomponenten-Anteilen sowie gleichen Silanpfropfungsrezepturen generiert. Unterschiede ergeben sich hinsichtlich Art und Anteil des Katalysators und Wasserspenders: Während die Probe M1 ohne Zugabe eines Wasser-Carriers erzeugt wurde, enthalten die Proben M2 und M3 als Wasserlieferanten 3 phr Magnesiumsulfat-Hydrat. Zudem wurden sie unter Zugabe verschiedener Katalysatorsysteme erzeugt.
Bei den Vergleichsproben M4 und M5 handelt es sich um quasi statisch vernetzte Blends, die alternativ 0 und 5 phr Compatibilizer (Fusabond MC 190 D) enthalten. Da weder Katalysatoren noch Wasserspender zuaddiert wurden, ist bei diesen Varianten in status nascendi bestenfalls eine Anvernetzung der synthetischen Kautschukphase zu erwarten.

**Tabelle 1:**

| **Rezepturparameter ausgewählter TPU/EVA-Zweiphasenwerkstoffe** | | | | | | |
|---|---|---|---|---|---|---|
| **Komponente** | | **M1** | **M2** | **M3** | **M4** | **M5** |
| EVA-Polymer Evatane 40-55 | Gew.% | 45 | 45 | 45 | 50 | 50 |
| Polyurethan Avalon 70 AE | Gew.% | 55 | 55 | 55 | 50 | 50 |
| Compatibilizer Fusabond MC 190 D | phr | 5 | 5 | 5 | 0 | 5 |
| Organosilan VTMOS | phr | 3,0 | 3,0 | 3,0 | 3,0 | 3,0 |
| VTMOS/DHBP | phr | 70 | 70 | 70 | 70 | 70 |
| Vernetzungskatalysator | phr | 2 Palmitinsäure + 4 phc Na-fluorid | 2 Stearinsäure + 4 phc Na-fluorid | 2 Zeolith + Stearinsäure + 4 phc Na-fluorid | 0 | 0 |
| Wasser-Carrier | phr | 0 | 3 Magnesiumsulfat Hydrat | 3 Magnesiumsulfat Hydrat | 0 | 0 |

**Tabelle 2:**

| **Eigenschaftsprofile der spezifizierten TPV-Proben** | | | | | | |
|---|---|---|---|---|---|---|
| **Eigenschaft** | | **M1** | **M2** | **M3** | **M4** | **M5** |
| Shore A (15 s) | | 69 | 69 | 69 | 68 | 70 |
| Spannung (ε = 100 %) | MPa | 2,8 | 2,8 | 3,0 | 3,6 | 3,4 |
| Bruchspannung | MPa | 9,5 | 6,5 | 7,5 | 7,3 | 10,6 |
| Bruchdehnung | % | 1238 | 1073 | 1035 | 665 | 1100 |
| Zugverformungsrest | % | 8 | 7 | 6 | 7 | 7 |
| Druckverformungsrest (30 °C/22 h) | % | 48 | 41 | 40 | 58 | 55 |
| Ölquellung (70 °C/22 h) | % | 23 | 23 | 22 | 26 | 23 |
| MVI_{190°/5 kg} | ml/10 min. | 6 | 6 | 5 | 3 | 1,5 |

Wie aus Tabelle 2 hervorgeht, weisen alle Proben, bedingt durch eine weitgehend identische Basiskomponentenrezeptierung ähnliche Shore A-Werte von annähernd 69 SHE auf.

Die thermoplastischen Vulkanisate (M1 bis M3) zeichnen sich durch eine hohe Bruchdehnung (1000 ≤ ε_{B} ≤ 1200 %) und einen im Vergleich zu thermoplastischen PP/EPDM-Vulkanisaten extrem niedrigen Ölquellungswert (ÖQ = 23 %) aus. Bei den markteingeführten, polyolefinbasierten TPV-Typen bewegen sich die Ölquellungsraten im Bereich von 70 ≤ ÖQ ≤ 110 %.

Die Probe M1, ohne Zugabe eines Wasserspenders compoundiert, weist eine sehr fein dispergierte Kautschukphase auf, weil die EVA-Vernetzungsreaktion auf Grund der nur in geringem Maße vorhandenen Wassermoleküle verlangsamt abläuft. Bei dem entsprechenden Laborkneterversuch zeigt sich dies in Form einer reduzierten Steigerung ∂Md/∂t des sogenannten Vernetzungsastes nach Zugabe des Katalysatorsystems. Auf Grund dieser Zusammenhänge ist die Probe M1 zwar durch eine relativ hohe Bruchspannung von σ_{B} = 9,5 Mpa gekennzeichnet, (bei PP/EPDM-TPVs mit Shore A = 69 SHE liegt der mittlere σ_{B}-Wert bei 6,5 Mpa), aber auf Grund der unvollständigen Vernetzung der Kautschukphase fallen die elastischen Rückstellkräfte gering und damit der Druckverformungsrest mit DVR = 48 % relativ hoch aus.

Durch Zugabe von 3 phr Wasserspender (M2, M3) werden die Hydrolyse- und Kondensationsreaktion bei der Silanvernetzung beschleunigt und gleichzeitig der Gelgehalt und die Vernetzungsdichte erhöht. Als Folge davon fällt der Druckverformungsrest von 48 auf 40 % ab.

Aus einem Vergleich der charakteristischen Eigenschaftsparameter der Materialvarianten M2 und M3 entnimmt man, dass eine Katalysatorkombination, bestehend aus Stearinsäure, Zeolith und Natriumfluorid, im Vergleich zur reinen Stearinsäurekatalyse in vorteilhafter Weise zu höheren Bruchspannungswerten und abgesenkten DVR- und ÖQ-Werten führt.

Ein Vergleich der Eigenschaftsparameter der beiden physikalischen Blends (Proben M4 und M5) lässt die vorteilhafte Wirkung der Compatibilizer-Zugabe erkennen.

Die für die Proben M1 bis M3 ermittelten MVI_{190°/5 kg}-Werte (vgl. Tabelle 1) zeigen, dass derartige Zweiphasenwerkstoffe sowohl mittels Spritzgießen als auch durch Extrudieren problemlos verarbeitbar sind. Bei allen derartigen Vulkanisaten ist der Speichermodul G' deutlich größer als der Verlustmodul, so dass die Phasenverschiebung tan δ = G"/G' klein ausfällt, was als Zeichen ausgeprägter elastischer Eigenschaften interpretiert werden kann.

### Optimierungsschritte

Durch Zugabe synergetischer Copolymere (z. B. 1-Dodecen) kann das VTMOS/DHBP-Verhältnis bis auf einen Wert von 25 abgesenkt werden, ohne dass eine merkliche Vorvernetzung der relativ niedermolekularen, synthetischen Kautschukphase eintritt. Bei konstant gehaltener VTMOS-Zugabemenge bedeutet dies eine Erhöhung des Peroxidgehaltes in der Silanpfropfungsrezeptur. Daraus resultieren vergrößerte VTMOS-Pfropfraten, deutlich angehobene Gelgehalte (C_{gel} ≈ 95 %) und Vernetzungsdichten, die in summa zu einer weiteren Absenkung des Druckverformungsrestes beitragen. Die neu entwickelten Katalysatorsysteme und Wasser-Carrier ermöglichen eine Optimierung des dynamischen EVA-Vernetzungsvorganges ohne dass dieser eine Schädigung der TPU-Matrix bewirkt, wie dies beim Einsatz von DBTL als Reaktionsbeschleuniger der Fall ist.

Die erfindungsgemäßen TPU/EVA-Zweiphasenwerkstoffe lassen sich ohne Materialvortrocknung zu ausgesprochen ölresistenten, hochelastischen Extrudaten und Formteilen mit exzellenter Oberflächenqualität und ansprechenden haptischen Eigenschaften verarbeiten. Die Vulkanisate sind mit niedrigen Shore A-Werten herstellbar und zeichnen sich durch herausragende Festigkeits- und Dehndeformationseigenschaften aus. Eine gute Chemikalien- und Abrasionsresistenz, bedingt durch die TPU-Matrix, kennzeichnet die TPU/EVA-Vulkanisate. In Einzelfällen kann das Vulkanisat auch den TPU-Reinstoff substituieren, wobei sich neben Kostenvorteilen auch Erleichterungen beim Verarbeitungsprozess ergeben.

## Patentansprüche

1. EVA-Polymermaterial mit einem Vinylacetatanteil des EVA-Polymers von 20 bis 50 Gew.%, wobei das Polymer in Gegenwart eines Co-Monomeren peroxidisch mit einem vernetzbaren Organosilan gepfropft ist, wobei das Co-Monomere ausgewählt ist aus substituierten und unsubstituierten α-Olefinen.

2. EVA-Polymermaterial nach Anspruch 1, **dadurch gekennzeichnet, dass** der Vinylacetatanteil des EVA-Polymers 35 bis 50 Gew.%, weiter bevorzugt 40 bis 50 Gew.%, beträgt.

3. EVA-Polymermaterial nach Anspruch 1 oder 2, **dadurch gekennzeichnet, dass** der Anteil des gepfropften Organosilans 1,5 bis 5 Gew.%, bezogen auf die gesamte Masse des EVA-Polymers, beträgt.

4. EVA-Polymermaterial nach Anspruch 3, **dadurch gekennzeichnet, dass** der Anteil des gepfropften Organosilans 2 bis 4,5 Gew.%, weiter bevorzugt 3 bis 4 Gew.%, bezogen auf die gesamte Masse des EVA-Polymers, beträgt.

5. EVA-Polymermaterial nach einem der voranstehenden Ansprüche, **dadurch gekennzeichnet, dass** das Organosilan und das Peroxid in einem Gewichtsverhältnis von 100 bis 25 zur Pfropfung verwendet werden, bezogen auf einen Aktivsauerstoffgehalt von 9,8% des 2,5-Dimethylhexan-2,5-di-t-butylperoxids (DHBP).

6. EVA-Polymermaterial nach Anspruch 5, **dadurch gekennzeichnet, dass** das Gewichtsverhältnis von Organosilan und Peroxid 70 bis 25 beträgt, bezogen auf den Aktivsauerstoffgehalt von DHBP.

7. EVA-Polymermaterial nach einem der Ansprüche 1 bis 6, **dadurch gekennzeichnet, dass** das Mol-Verhältnis von Co-Monomer zu Organosilan 0,1 bis 1, bevorzugt 0,2 bis 0,5, weiter bevorzugt 0,25 bis 0,35 beträgt.

8. Thermoplastische Zusammensetzung, umfassend eine thermoplastische Polyurethan-Matrix und eine in der Matrix mikrodispers verteilte Phase aus einem EVA-Polymermaterial nach einem der Ansprüche 1 bis 7.

9. Thermoplastische Zusammensetzung nach Anspruch 8, **dadurch gekennzeichnet, dass** das Gewichtsverhältnis des Matrixmaterials zu dem mikrodispers verteilten EVA-Polymermaterial im Bereich von 70:30 bis 30:70 liegt.

10. Thermoplastische Zusammensetzung nach Anspruch 8 oder 9, **dadurch gekennzeichnet, dass** das Gewichtsverhältnis von TPU-Matrixmaterial zu EVA-Polymermaterial im Bereich von 35:60 bis 60:40 liegt.

11. Thermoplastische Zusammensetzung nach einem der Ansprüche 8 bis 10, **dadurch gekennzeichnet, dass** das thermoplastische Polyurethan-Matrixmaterial ausgewählt ist aus aliphatischen oder aromatischen Polyesteroder Polyetherurethanen.

12. Thermoplastische Zusammensetzung nach einem der Ansprüche 8 bis 11, **dadurch gekennzeichnet, dass** die Zusammensetzung einen Vernetzungskatalysator für das Organosilan gepropfte EVA-Polymer umfasst.

13. Thermoplastische Zusammensetzung nach Anspruch 12, **dadurch gekennzeichnet, dass** der Vernetzungskatalysator eine Lewissäure ist.

14. Thermoplastische Zusammensetzung nach Anspruch 12 oder 13, **dadurch gekennzeichnet, dass** die Zusammensetzung einen Wasser-Carrier umfasst.

15. Thermoplastische Zusammensetzung nach einem der Ansprüche 8 bis 14, **dadurch gekennzeichnet, dass** die Zusammensetzung einen Zeolithen umfasst.

16. Thermoplastische Zusammensetzung nach Anspruch 14 oder 15, **dadurch gekennzeichnet, dass** das Material einen Wasser-Carrier in fein verteilter Form umfasst, wobei der Wasser-Carrier einen Anteil von 1 bis 5 Gew.% an dem Gesamtmaterial aufweist.

17. Verfahren zur Herstellung eines vernetzbaren EVA-Polymermaterial, umfassend ein EVA-Polymer mit einem Vinylacetatanteil von 20 bis 50 Gew.% und in Gegenwart eines Co-Monomeren, welches ausgewählt ist aus von Ethylen verschiedenen unsubstituierte und substituierten α-Olefinen, mit einem Organosilan peroxidisch gepfropft wird.

18. Verfahren nach Anspruch 17, **dadurch gekennzeichnet, dass** der Vinylacetatanteil des EVA-Polymeren 35 bis 50 Gew.%, weiterbevorzugt 40 bis 50 Gew.% beträgt.

19. Verfahren nach Anspruch 17 oder 18, **dadurch gekennzeichnet, dass** der Anteil des gepfropften Organosilans 1,5 bis 5 Gew.%, bezogen auf das EVA-Polymer beträgt.

20. Verfahren nach Anspruch 19, **dadurch gekennzeichnet, dass** der Anteil des gepfropften Organosilans 2 bis 4,5 Gew.%, weiter bevorzugt 3 bis 4 Gew.%, bezogen auf das EVA-Polymer beträgt.

21. Verfahren nach einem der Ansprüche 17 bis 20, **dadurch gekennzeichnet, dass** bei der Pfropfung das Gewichtsverhältnis von Organosilan zu Peroxid im Bereich von 100 bis 25 gewählt wird,bezogen auf einen Aktivsauerstoffgehalt von 2,5-Dimethylhexan-2,5-di-t-butylperoxid (DHBP).

22. Verfahren nach Anspruch 21, **dadurch gekennzeichnet, dass** das Gewichtsverhältnis im Bereich von 70 bis 25 gewählt wird.

23. Verfahren nach einem der Ansprüche 17 bis 22, **dadurch gekennzeichnet, dass** das Mol-Verhältnis von Co-Monomer zu Organosilan 0,1 bis 1, bevorzugt 0,2 bis 0,5, am meisten bevorzugt 0,25 bis 0,35 beträgt.

24. Verfahren zur Herstellung einer thermoplastischen Zusammensetzung umfassend eine thermoplastische Polyurethanmatrix und eine darin verteilte Phase aus einem EVA-Polymermaterial, **dadurch gekennzeichnet, dass** in dem Polyurethanmatrixmaterial ein gemäß einem Verfahren gemäß einem der Ansprüche 17 bis 23 erhaltenes EVA-Polymermaterial mikrodispers verteilt wird und dass das vernetzbare EVA-Polymer dynamisch vernetzt wird.

25. Verfahren nach Anspruch 24, **dadurch gekennzeichnet, dass** das Verfahren zu Herstellung eines vernetzbaren EVA-Polymermaterials und die Weiterverarbeitung zu der thermoplastischen Zusammensetzung als ein Einstufen-Prozess durchgeführt wird.

26. Verfahren nach Anspruch 24 oder 25, **dadurch gekennzeichnet, dass** der Zusammensetzung ein Vernetzungskatalysator für das silangepfropfte EVA-Polymer beigemischt wird.

27. Verfahren nach Anspruch 26, **dadurch gekennzeichnet, dass** als Vernetzungskatalysator eine Lewissäure verwendet wird.

28. Verfahren nach einem der Ansprüche 24 bis 27, **dadurch gekennzeichnet, dass** der Zusammensetzung ein Wasser-Carrier beigemischt wird.

29. Verfahren nach Anspruch 28, **dadurch gekennzeichnet, dass** der Wasser-Carrier in einer Menge beigemischt wird, welche einem Gehalt von 1 bis 5 Gew.% des Gesamtmaterials entspricht.

30. Verfahren nach einem der Ansprüche 24 bis 29, **dadurch gekennzeichnet, dass** dem Polymermaterial ein Zeolith beigemischt wird.
